# EUROPÄISCHE PATENTSCHRIFT

(11) **EP 0 995 914 B1**
(45) Veröffentlichungstag und Bekanntmachung des Hinweises auf die Patenterteilung: **07.06.2006**
(21) Anmeldenummer: 99120761.4
(22) Anmeldetag: 20.10.1999
(51) Int. Cl.: F16B 13/10, F16B 13/06, F16B 13/04

(54) **Befestigungselement aus Metall mit Innengewinde für die Durchsteckmontage**
Metal fastener with inner thread for pass-through mounting
Elément de fixation métallique à filetage interne pour montage traversant

(30) Priorität: 23.10.1998 DE 19848931
(43) Veröffentlichungstag der Anmeldung: 26.04.2000
(73) Patentinhaber: fischerwerke Artur Fischer GmbH & Co. KG, 72178 Waldachtal (DE)
(72) Erfinder: Frischmann, Albert, 79341 Kenzingen (DE)

(56) Entgegenhaltungen:
- DE-A- 2 150 572
- GB-A- 2 069 087
- US-A- 2 088 955
- US-A- 3 283 641

## Beschreibung

Die Erfindung betrifft ein Befestigungselement aus Metall mit einem im Bohrloch eines Bauteils verankerbaren Grundkörper und einer in ein Innengewinde des Grundkörpers einschraubbaren Schraube gemäß dem Oberbegriff des Anspruches 1.

Derartige als Schlaganker bezeichnete Befestigungselemente sind allgemein bekannt. Sie bestehen aus einer Metallhülse, die von ihrem vorderen Ende ausgehend über einen Teil ihrer Länge geschlitzt sind. Zum vorderen Ende hin verjüngt sich die Innenbohrung der Hülse, so dass durch Eintreiben eines Spreizkörpers in die sich verjüngende Innenbohrung die Aufspreizung der Hülse und damit deren Verankerung in einem Bohrloch erfolgt. Zum Eintreiben des Spreizkörpers wird ein Setzwerkzeug verwendet, dessen Dorn durch die Innengewindebohrung passt.

Nach der Verankerung wird zur Befestigung eines Gegenstandes die Schraube durch das Befestigungsloch des Gegenstandes durchgesteckt und in das Innengewinde des Schlagankers eingeschraubt. Zur Vermeidung eines zu großen Lochspiels ist der Durchmesser des Befestigungslochs im zu befestigenden Gegenstand dem Außendurchmesser der Schraube angepasst. Dies schließt jedoch eine Durchsteckmontage aus, bei der das Befestigungselement durch das Befestigungsloch des Gegenstandes durchgesteckt und in das Bohrloch des Bauteils eingeführt und verankert wird. Insbesondere bei einer Mehrfachbefestigung bedeutet dies, dass zunächst alle Befestigungselemente positionsgenau gesetzt und verankert werden müssen. Danach wird der Gegenstand auf das Bauteil aufgesetzt und mit in die verankerten Schlaganker eingreifenden Schrauben befestigt. Eine solche Montage erfordert ein exaktes Ausmessen der Befestigungspunkte und sorgfältiges Erstellen der Bohrlöcher, während bei der Durchsteckmontage ein Abbohren der Befestigungspunkte durch die Löcher im zu befestigenden Gegenstand möglich ist.

Ferner weisen die bekannten Schlaganker kein Nachspreizverhalten auf, so dass Bohrlocherweiterungen durch Rissbildung nicht ausgeglichen werden können. Aus diesem Grund sind solche Schlaganker nicht für Verankerungen in der Zugzone, in der üblicherweise Risse auftreten, geeignet.

Aus der DE 2 150 572 A ist ein Befestigungselement aus Metall bekannt, das eine geschlitzte Spreizhülse aufweist, in die zum Aufspreizen der Spreizhülse und zum Verankern des Befestigungselements in einem Bohrloch ein Spreizkonus einziehbar ist. Der Spreizkonus weist ein axiales Durchgangsloch mit Innengewinde auf, in das eine Schraube eingeschraubt ist, die die Spreizhülse durchgreift. Zwischen einem Schraubenkopf und der Spreizhülse ist eine verformbare Kunststoffhülse auf die Schraube aufgesetzt. Bewegt sich beim Verankern des bekannten Befestigungselements die Spreizhülse und die Kunststoffhülse in Richtung einer Bohrlochmündung, so dass die Kunststoffhülse vorsteht, lässt sich die Kunststoffhülse durch Anziehen der Schraube stauchen, so dass ein zu befestigender Gegenstand gegen das Bauteil gespannt wird, in dem das Befestigungselement verankert ist. Ein Ausdrehen der Schraube aus dem Spreizkonus nach einer Verankerung des Befestigungselements ist nicht vorgesehen, weil der Spreizkonus verloren gehen kann. Insbesondere wenn die Schraube erneut angesetzt und axialer Druck auf den Spreizkonus ausgeübt wird, bevor die Schraube in ihn eingeschraubt ist, kann der Spreizkonus aus der Spreizhülse herausfallen.

Der Erfindung liegt die Aufgabe zugrunde, ein Befestigungselement mit Innengewinde für die Durchsteckmontage zu schaffen, dessen Schraube nach Verankerung des Befestigungselements ohne die Gefahr eines Verlierens des Spreizbereichs ausschraubbar ist.

Die Lösung dieser Aufgabe wird durch die in Anspruch 1 angegebenen Merkmale erreicht.

Mit dem auf der Schraube angeordneten verformbaren und mindestens der Dicke des zu befestigenden Gegenstandes entsprechenden Element wird die Befestigung eines Gegenstandes in Durchsteckmontage ermöglicht. Durch die Befestigungslöcher des Gegenstandes werden die Bohrungen im Bauteil für das Einsetzen der Befestigungselemente erstellt und danach die Befestigungselemente mit der in den Grundkörper eingedrehten Schraube bis zum Aufliegen des Schraubenkopfes auf dem zu befestigenden Gegenstand eingesetzt. Durch weiteres Eindrehen der Schraube in das Innengewinde des Grundkörpers bewegt sich der Grundkörper axial in Richtung Schraubenkopf, wobei das verformbare Element gestaucht wird. Durch die axiale Verschiebung des Grundkörpers wird gleichzeitig der am Grundkörper angeordnete Spreizkonus in den unverrückbar im Bohrloch festsitzenden Spreizclip eingezogen und dabei das Befestigungselement im Bohrloch des Bauteils verankert. Durch die Stauchung des verformbaren Elements wird der zu befestigende Gegenstand im Befestigungsloch radial abgestützt und damit auf den Gegenstand wirkende Querkräfte aufgenommen. Tritt eine Bohrlocherweiterung durch Rissbildung ein, wird diese Bohrlocherweiterung durch Nachrutschen des Spreizkonuses in den Spreizclip ausgeglichen. Das zwischen dem Grundkörper und der Schraube verspannte Element dient gleichzeitig auch als Sicherung, um ein Lösen der Schraube bei Vibrationen zu vermeiden. Die Erfindung hat den Vorteil, dass der Spreizbereich unverlierbar mit dem Spreizclip ist. Dadurch ist es möglich, die Schraube aus dem verankerten Befestigungselement herauszuschrauben ohne dass die Gefahr besteht, dass der Spreizbereich verloren geht und das verankerte Befestigungselement nicht mehr verwendbar ist. Selbst wenn beim erneuten Einschrauben der Schraube axialer Druck auf den Grundkörper ausgeübt wird, kann der Spreizbereich nicht verloren gehen. Die Erfindung ermöglicht es dadurch, einen mit dem Befestigungselement an einem Bauteil befestigten Gegenstand abzunehmen und diesen erneut oder einen anderen Gegenstand mit dem verankerten Befestigungselement am Bauteil zu befestigen. Weiterer Vorteil der Erfindung ist, dass das Befestigungselement durch sein Nachspreizen für die Zugzone geeignet ist.

Das verformbare Element ist als Kunststoffbuchse mit einem im Mittelbereich reduzierten Querschnitt ausgebildet. Dadurch wird eine hohe Stauchfähigkeit erreicht, die sicherstellt, dass genügend Verschiebeweg für den Grundkörper zur Verspreizung des Spreizclips zur Verfügung steht. Zur Zentrierung des Befestigungselements bei der Montage im Bohrloch des Bauteils und Befestigungsgegenstand ist es zweckmäßig, an den beiden Enden der Buchse jeweils einen Zentrierbund vorzusehen.

Um die Demontage des zu befestigenden Gegenstandes zu erleichtern ist es ferner zweckmäßig, die Innenfläche der Buchse mit Rippen zu versehen. Dadurch wird erreicht, dass beim Lösen der Schraube die Buchse auf der Schraube verbleibt und bei erneuter Befestigung des Gegenstandes die Schraube mit dem verformbaren Element vorkomplettiert wieder verwendet werden kann.

Die Erfindung wird nachfolgend anhand eines in der Zeichnung dargestellten Ausführungsbeispiels näher erläutert.

Es zeigen:
- Figur 1: die Einzelteile des Befestigungselements;
- Figur 2: das komplettierte Befestigungselement im Einbauzustand;
- Figur 3, 4 und 5: Montage und Demontage mit dem Befestigungselement nach Figur 1.

Das erfindungsgemäße Befestigungselement 10 besteht aus einer Schraube 1 mit einem Sechskantkopf 2 und einem Grundkörper 7, der an seinem vorderen Ende einen Spreizbereich 5 aufweist. Dieser Spreizbereich 5 wird durch einen reduzierten Abschnitt 11 gebildet, an den sich ein Spreizkonus 8 anschließt, sowie einen Spreizclip 16, der auf dem reduzierten Abschnitt 11 angeordnet ist. Damit sich der Spreizclip 16 im Bohrloch festsetzt, sind an dessen Außenflächen Vorsprünge 9 angeordnet. Am hinteren Ende des Grundkörpers 7 befindet sich ein Innengewinde 19, das sich über einen Teil der Länge des Grundkörpers erstreckt. Zwischen dem Schraubenkopf 2 und dem hinteren Stirnende des Grundkörpers 7 ist ein verformbares Element 4 angeordnet, das vorzugsweise aus Kunststoff besteht und als Buchse ausgebildet ist. An den beiden Enden der Buchse ist jeweils ein Zentrierbund 14, 15 angeordnet, deren Durchmesser dem Außendurchmesser des Grundkörpers 7 entspricht. Damit ergibt sich ein reduzierter Querschnitt der Buchse 4 in ihrem Mittelbereich.

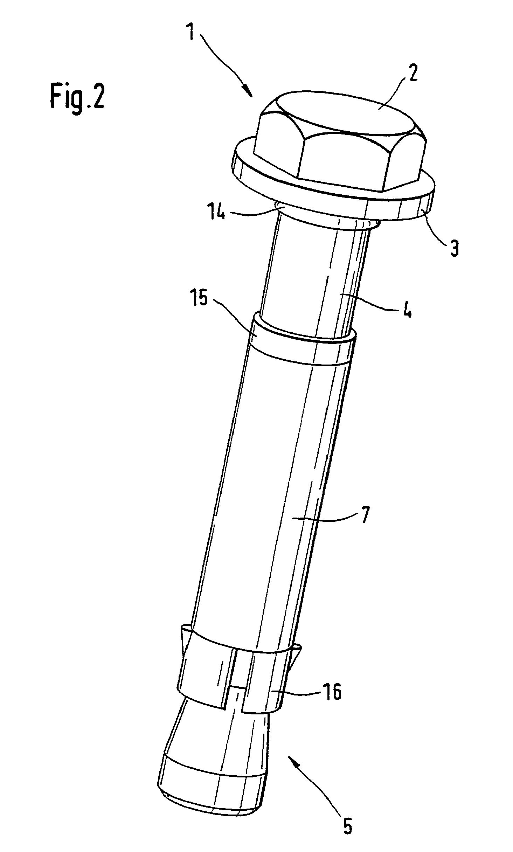

In Figur 2 ist das komplette Befestigungselement im Gebrauchszustand dargestellt, wobei zwischen der Buchse 4 und dem Kopf 2 der Schraube 1 noch eine Unterlegscheibe 3 angeordnet ist.

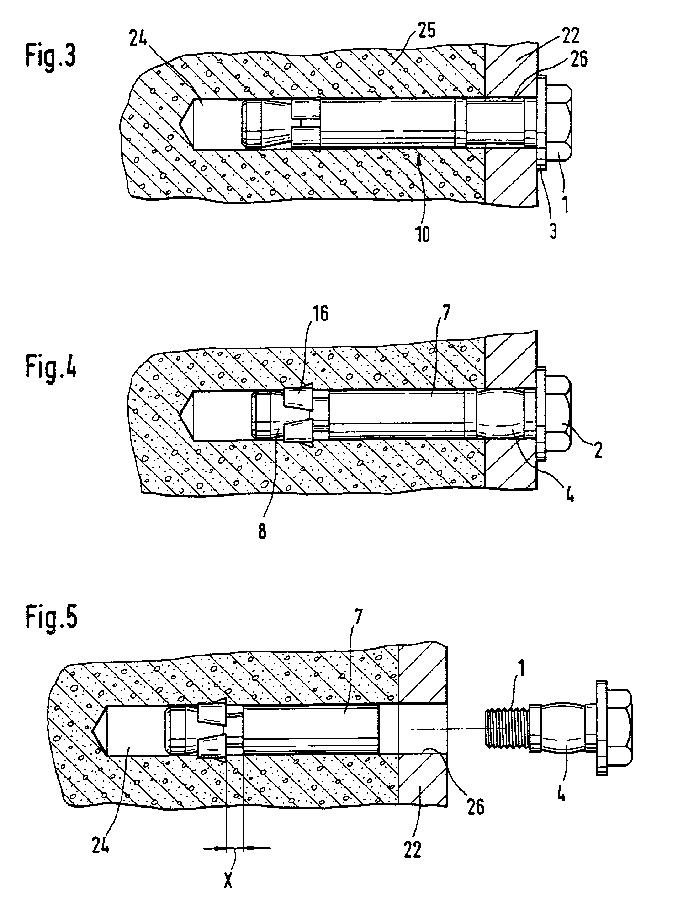

Die in Figur 3-5 dargestellte Montage des Befestigungselements 10 erfolgt in der Weise, dass nach der Herstellung einer Bohrung 24 im Bauteil 25 bspw. durch Abbohren durch die Befestigungslöcher 26 des zu befestigenden Gegenstandes 22 das Befestigungselement 10 komplett vormontiert in das Bohrloch 24 bis zur Anlage der Unterlegscheibe 3 in das Bohrloch eingeschoben wird. Durch Eindrehen der Schraube 1 in das Innengewinde 19 des Grundkörpers 7 wird dieser axial in Richtung Schraubenkopf 2 bewegt und dabei gleichzeitig der Spreizkonus 8 in den Spreizcilp 16 zu dessen radialer Aufspreizung eingezogen. Um den Verschiebeweg (X) wird dabei die Buchse 4 gestaucht.

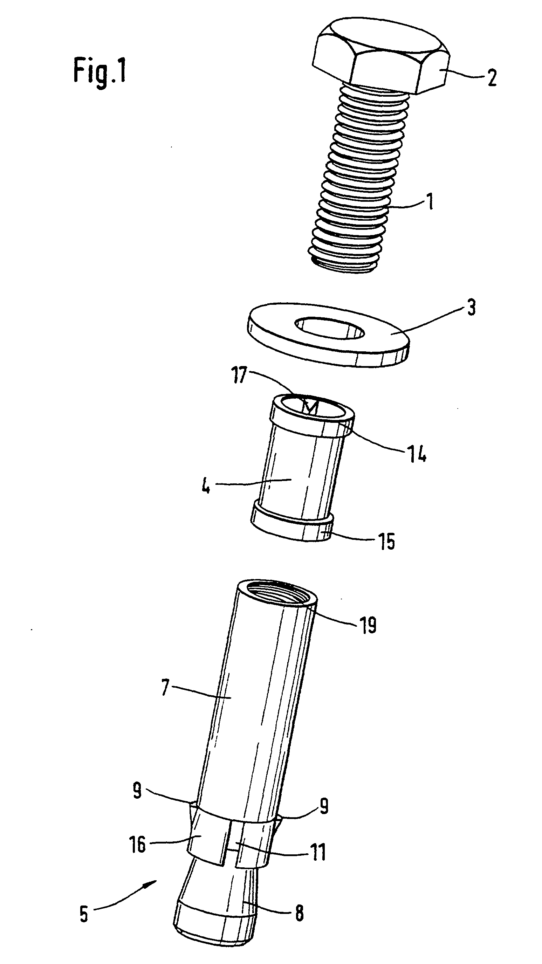

Besteht nunmehr die Absicht, den Befestigungsgegenstand 22 wieder abzunehmen, wird die Schraube 1 aus dem Innengewinde 19 des im Bohrloch 24 verankerten Grundkörpers 7 ausgeschraubt (siehe Figur 5). Da sich die Buchse 4 durch die Stauchung auch auf dem Gewinde der Schraube 1 festsetzt, bleibt die Stauchung in seiner ursprünglichen Form bestehen. Die Schraube mit der aufgesetzen Buchse kann daher zur erneuten Befestigung des Gegenstandes 22 verwendet werden. Die Aufrechterhaltung der Stauchung kann noch dadurch verbessert werden, dass die Innenfläche der Buchse 4 mit Rippen 17 versehen ist (siehe Figur 1).

## Patentansprüche

1. Befestigungselement (10) aus Metall bestehend aus einem in einem Bohrloch eines Bauteils verankerbaren Grundkörper (7), der einen Spreizbereich (5) und ein Innengewinde (19) aufweist, einem Spreizclip (16), der durch Einziehen des Spreizbereichs (5) des Grundkörpers (7) aufspreizbar ist, einer Schraube (1), die in das Innengewinde (19) des Grundkörpers (7) einschraubbar ist, und einem verformbaren Element (4), das auf der Schraube (1) angeordnet ist und dessen Länge mindestens der Dicke eines zu befestigenden Gegenstandes (22) entspricht, **dadurch gekennzeichnet, dass** der Grundkörper (7) den Spreizclip (16) durchgreift, so dass der Spreizbereich (5) unverlierbar mit dem Spreizclip (16) ist, dass sich das Innengewinde (19) an einem dem Spreizbereich (5) femen Ende des Grundkörpers (7) und damit auf einer anderen Seite des Spreizclip (16) als der Spreizbereich (5) befindet, und dass sich das verformbare Element (4) an dem Grundkörper (7) abstützt.

2. Befestigungselement nach Anspruch 1, **dadurch gekennzeichnet, dass** das verformbare Element (4) eine aus Kunststoff bestehende Buchse mit einem im Mittelbereich reduzierten Querschnitt ist.

3. Befestigungselement nach Anspruch 2, **dadurch gekennzeichnet, dass** die Innenfläche der Buchse (4) mit Rippen (17) versehen ist.

4. Befestigungselement nach Anspruch 2, **dadurch gekennzeichnet, dass** die Buchse (4) an ihren beiden Enden jeweils einen Zentrierbund (14,15) aufweist.

## Claims

1. Fixing element (10) of metal, consisting of a body (7), which is anchorable in a hole drilled in a building part, which body has an expansion portion (5) and an internal thread (19); an expansion clip (16) which is arranged to be expanded by drawing in the expansion portion (5) of the body (7); a screw (1) arranged to be screwed into the internal thread (19) of the body (7); and a deformable element (4), which is arranged on the screw (1) and corresponds in length at least to the thickness of an article (22) being attached, **characterized in that** the body (7) passes through the expansion clip (16) so that the expansion portion (5) is captive with the expansion clip (16); the internal thread (19) is located at the end of the body (7) remote from the expansion portion (5) and is thus located on the other side of the expansion clip (16) from the expansion portion (5); and the deformable element (4) is supported on the body (7).

2. Fixing element according to claim 1, **characterized in that** the deformable element (4) is a bush consisting of plastics material that is of reduced cross-section in its centre region.

3. Fixing element according to claim 2, **characterized in that** the internal surface of the bush (4) is provided with ribs (17).

4. Fixing element according to claim 2, **characterized in that** the bush (4) has a centring collar (14, 15) at each of its two ends.

## Revendications

1. Elément de fixation (10) composé de métal provenant d'un corps de base (7) pouvant être ancré dans un trou de perçage d'un composant, lequel comporte une surface extensible (5) et un taraudage (19), d'une agrafe extensible (16), lequel peut être étendu en retirant la surface extensible(5) du corps de base (7), d'une vis (1), pouvant être vissée à l'intérieur du taraudage (19) du corps de base (7), et d'un élément déformable (4), étant fixé sur la vis (1) et ayant une longueur correspond au moins à l'épaisseur d'un objet étant à fixer (22), **caractérisé en ce que** le corps de base (7) traverse l'agrafe extensible, de sorte que la surface extensible(5) soit fixée définitivement avec l'agrafe extensible (16), de sorte que le taraudage (19) se situe au niveau d'une extrémité du corps de base (7), éloignée de la surface extensible (5), et par conséquent sur un autre côté de l'agrafe extensible (16) que la surface extensible (5), et de sorte que l'élément déformable (4) prenne appui contre le corps de base (7).

2. Elément de fixation selon la revendication 1, **caractérisé en ce que** l'élément déformable (4) est une boîte composée de matière synthétique munie d'une section transversale réduite au niveau de sa surface moyenne.

3. Elément de fixation selon la revendication 2, **caractérisé en ce que** la surface intérieure de la boîte (4) est munie de nervures (17).

4. Elément de fixation selon la revendication 2, **caractérisé en ce que** la boîte (4) est munie d'un épaulement (14, 15) au niveau de chacune de ses deux extrémités.
